# FASCICULE DE BREVET EUROPEEN

(11) **EP 0 995 034 B1**
(45) Date de publication et mention de la délivrance du brevet: **30.01.2002**
(21) Numéro de dépôt: 98936451.8
(22) Date de dépôt: 06.07.1998
(51) Int. Cl.: F03C 1/24, B60T 13/22, F03C 1/04

(54) **DISPOSITIF DE FREIN DE LA ROTATION RELATIVE DE DEUX ELEMENTS**
BREMSVORRICHTUNG MIT ZWEI RELATIV ZUEINANDER DREHBAREN TEILEN
DEVICE FOR BRAKING THE RELATIVE ROTATION OF TWO ELEMENTS

(30) Priorité: 07.07.1997 FR 9708578; 29.06.1998 FR 9808209
(43) Date de publication de la demande: 26.04.2000
(73) Titulaire: POCLAIN HYDRAULICS INDUSTRIE, 60411 Verberie (FR)
(72) Inventeur: ALLART, Bernard, F-60800 Crépy-en-Valois (FR); BIGO, Louis, F-60200 Compiègne (FR); PEROT, Marc, F-60330 Eve (FR); MARTIN, Louis, F-60200 Compiègne (FR)
(74) Mandataire: Intès, Didier Gérard André
(86) Numéro de dépôt international: FR9801436
(87) Numéro de publication internationale: WO9902855

(56) Documents cités:
- DE-A- 3 343 596
- DE-A- 19 637 570
- FR-A- 2 739 418
- US-A- 4 026 391
- US-A- 4 795 005

## Description

La présente invention concerne un dispositif de frein de la rotation d'un premier élément par rapport à un deuxième élément, susceptibles de tourner l'un par rapport à l'autre autour d'un axe de rotation et supportés l'un par rapport à l'autre par l'intermédiaire de moyens de roulement. Le dispositif comprend des premiers et des deuxièmes moyens de freinage respectivement solidaires du premier et du deuxième élément vis-à-vis de la rotation autour de l'axe de rotation, ainsi qu'un piston de freinage apte à occuper une position active de frein dans laquelle il sollicite les premiers et les deuxièmes moyens de freinage en engagement mutuel pour empêcher leur rotation relative et une position inactive dans laquelle lesdits éléments sont libres de tourner l'un par rapport à l'autre, ledit piston étant sollicité en permanence vers sa position active par des moyens de rappel élastique, tandis que le piston est susceptible d'être déplacé vers sa position inactive par alimentation en fluide d'une chambre de défreinage.

L'invention s'applique plus particulièrement à un frein qui a un rôle de frein de stationnement ou de frein de sécurité, c'est-à-dire que ce frein agit sans dissipation d'énergie et en dessous d'une vitesse de rotation relative entre les deux éléments prédéterminée, qui varie selon les réalisations et qui est de l'ordre de 100 tr/min en moyenne.

Par exemple, le premier et le deuxième éléments peuvent être respectivement constitués par le carter et par l'arbre d'un moteur par exemple hydraulique. Ainsi, dans le cas d'un moteur à arbre tournant, le premier élément est fixe, tandis que le deuxième élément est tournant. Dans le cas d'un moteur à arbre fixe et à carter tournant, la situation est inverse.

Outre cette situation, dans laquelle l'un des éléments est fixe en rotation, tandis que l'autre est tournant, l'invention s'applique également à une autre situation dans laquelle les deux éléments sont montés tournants autour de l'axe de rotation, mais avec des vitesses différentes. C'est par exemple le cas lorsque le deuxième élément est formé par l'arbre portant la roue solaire d'un réducteur planétaire, tandis que le premier élément est formé par le carter de ce réducteur, sur la face interne duquel est réalisée la denture coopérant avec des satellites du réducteur pour entraîner le carter en rotation à une vitesse de rotation inférieure à celle de l'arbre précité.

On connaît, par le brevet US 4 057 297, un dispositif de frein de la rotation d'un arbre par rapport à un carter disposé autour de cet arbre. Dans ce dispositif, les premiers moyens de freinage sont constitués par une première série de lamelles de frein en forme d'anneaux solidaires en rotation du carter par des cannelures que présente la périphérie interne de ce carter et par des cannelures correspondantes réalisées par la périphérie externe des lamelles, tandis que les deuxièmes moyens de freinage sont constitués par une deuxième série de lamelles de frein en forme d'anneaux, intercalées entre les lamelles de frein de la première série et rendues solidaires en rotation de l'arbre par des cannelures que présente une bride elle-même solidaire en rotation de l'arbre et par des cannelures correspondantes ménagées sur la périphérie interne des lamelles de la deuxième série.

Dans ce dispositif, le piston de freinage est disposé dans le carter de frein, à une extrémité de ce dernier. Il est sollicité vers sa position active, dans laquelle il contraint les lamelles des deux séries à coopérer en frottement les unes avec les autres, par des rondelles ressorts, tandis qu'il peut être ramené vers sa position inactive par alimentation en fluide d'une chambre de défreinage.

Ce dispositif présente plusieurs inconvénients.

D'une part, il comporte un nombre de pièces relativement important dont l'assemblage est délicat, d'où il résulte des coûts de production relativement élevés et un encombrement relativement important. D'autre part, lors du freinage ou de la désactivation du freinage, le piston risque de patiner par rapport au disque de freinage dont il est le plus proche. De plus, les lamelles de freinage sont très fortement sollicitées par le couple de freinage. Elles doivent être extrêmement résistantes dans la région des cannelures, dans laquelle les contraintes sont extrêmement élevées du fait de la faiblesse des surfaces de contact entre les cannelures des lamelles et celles de l'élément, le carter de frein ou l'arbre de frein, dont elles sont solidaires.

Il faut encore noter que ce système rend nécessaire l'usinage de cannelures sur la périphérie interne du carter, sur la périphérie externe de la bride liée à l'arbre, et sur les périphéries externes, respectivement internes, des lamelles de frein des deux séries. La fabrication de ces cannelures est en elle-même coûteuse. En particulier, les déchets de fabrication doivent être soigneusement retirés, en particulier dans les faibles interstices ménagés entre les cannelures et dans les angles vifs formés par ces cannelures, pour permettre la pénétration à complémentarité de forme des cannelures des disques et de celles du carter ou de la bride tout en permettant le coulissement axial des disques lors du freinage ou du défreinage.

La présente invention vise à remédier à ces inconvénients pour assurer un freinage sûr et efficace avec un nombre de pièces restreint, pour des coûts de fabrication moindres et un encombrement limité.

Ce but est atteint grâce au fait que les premiers et deuxièmes moyens de freinage sont respectivement constitués par une première et une deuxième série de dents appartenant à un crabot, au fait que les dents de la première série sont solidaires d'une face radiale du piston, et au fait que le premier élément et le piston présentent chacun un profil de couplage s'étendant sur une face axiale de couplage, lesdits profils de couplage formant, vus en coupe transversale à l'axe de rotation, des ondulations exemptes d'arêtes vives, les ondulations du profil de couplage du premier élément et les ondulations du profil de couplage du piston étant aptes à s'imbriquer les unes dans les autres pour rendre le piston solidaire en rotation du premier élément.

Les génératrices des dents de la première et/ou de la deuxième série de dents peuvent être radiales ou coniques.

Les dents de la première série sont solidaires d'une face radiale du piston, ce qui signifie qu'elles sont soit directement usinées dans cette face radiale, soit formées dans une pièce séparée en forme de couronne qui est fixée sur cette face radiale par tout moyen connu.

Dans ce dernier cas, il est aisé de choisir les moyens de fixation, par exemple la soudure, et de dimensionner la face radiale du piston, de telle sorte que cette fixation supporte le couple de freinage. De même, les dents de la deuxième série peuvent être directement usinées dans une face radiale du deuxième élément qui fait face à la première série de dents, ou être fixées sur cette face radiale par tout moyen connu.

Les faces de couplage du piston et du premier élément présentent une forme ondulée exemptes d'arêtes vives ou de points anguleux. Les ondulations forment une courbe dont la tangente peut être déterminée en tous points. Par exemple, chaque ondulation complète, correspondant à une période de la courbe ondulée, s'étend sur un secteur angulaire de l'ordre de 20 à 30°, voire davantage.

De telles ondulations sont moins coûteuses à fabriquer que des cannelures, tout en permettant un couplage en rotation largement aussi satisfaisant. En particulier, il n'est pas nécessaire de procéder à des opérations d'ébavurage soignées puisque les ondulations ne présentent pas d'angle vif, contrairement aux cannelures.

Avantageusement, l'une des faces de couplage présente au moins une gorge d'étanchéité apte à recevoir un joint d'étanchéité destiné à réaliser une liaison étanche entre les deux faces axiales de couplage.

Cette disposition est permise par le fait que, contrairement à des cannelures, les ondulations des faces de couplage constituent des formes géométriques relativement simples dans lesquelles il est possible de tailler une gorge d'étanchéité de telle sorte que cette gorge puisse recevoir un joint ayant lui-même une géométrie relativement simple, afin d'étancher la liaison entre les deux faces de couplage tout en permettant leur coulissement relatif lors du déplacement du piston.

Grâce à cette disposition, il est possible de faire en sorte que ce joint délimite un côté de la chambre de défreinage. Ceci permet d'éviter de réaliser la chambre de défreinage dans une région trop éloignée de la face radiale du piston qui porte la première série de dents du crabot, ce qui limite d'autant l'encombrement axial du dispositif.

Avantageusement, la gorge d'étanchéité a une profondeur, mesurée pour chaque point de ladite gorge perpendiculairement à une droite tangente au profil de couplage de la face dans laquelle cette gorge est ménagée, qui est sensiblement constante sur le pourtour de la gorge de sorte que, les deux profils de couplage ayant des formes complémentaires, la gorge d'étanchéité est apte à loger un joint d'étanchéité de section constante.

Dans ce cas, la gorge d'étanchéité peut être taillée en déplaçant sur la face de couplage un outil dont l'extrémité libre d'usinage se trouve toujours à la même distance de la surface des ondulations. Le joint destiné à être placé dans cette gorge est également simple à fabriquer puisqu'il présente la même forme ondulée que les faces de couplage avec une section constante.

En variante, la gorge d'étanchéité peut être réalisée de telle sorte que son fond soit circulaire (elle serait alors taillée par un outil dont l'extrémité d'usinage se déplace selon un cercle) auquel cas sa profondeur, mesurée par rapport à la surface des ondulations, serait variable. Le joint d'étanchéité aurait alors lui-même une section variable, son profil en regard du fond de la gorge étant circulaire, tandis que son profil extérieur serait ondulé.

Selon une disposition avantageuse, le premier élément et le piston présentent, chacun, une face axiale d'étanchéité raccordée par un décrochement à la face de couplage du premier élément, respectivement à la face de couplage du piston, lesdites faces axiales d'étanchéité du premier élément et du piston étant situées en regard l'une de l'autre et coopérant entre elles par l'intermédiaire d'une liaison étanche, la chambre de défreinage étant alors ménagée entre la liaison étanche des faces de couplage et la liaison étanche des faces d'étanchéité.

Avantageusement, le premier élément s'étend au moins en partie autour du piston et la face de couplage du premier élément et la face de couplage du piston sont respectivement situées sur une face axiale du premier élément qui est tournée vers l'axe de rotation et sur une face axiale du piston qui tournée à l'opposé de l'axe de rotation.

Cette disposition permet de faire en sorte que les surfaces en contact des faces de couplage soient relativement importantes, de sorte que le piston peut être aisément dimensionné de manière à supporter le couple de freinage.

Dans ce cas, il est avantageux que le premier élément soit disposé autour du deuxième élément et que les faces de couplage dudit premier élément et du piston soient situées dans des régions éloignées de l'axe de rotation.

Cette disposition est particulièrement avantageuse dans la mesure où l'on sait que les efforts exercés sur les pièces par lesquelles passe le couple de freinage sont inversement proportionnels à la distance de ces pièces par rapport à l'axe de rotation du moteur. En d'autres termes, en faisant en sorte que les surfaces de couplage soient éloignées de l'axe, on permet au piston et au premier élément de mieux supporter le couple de freinage, sans risque d'usure prématurée.

L'invention sera bien comprise et ses avantages apparaîtront mieux à la lecture de la description détaillée qui suit, de modes de réalisation représentés à titre d'exemples non limitatifs.

La description se réfère aux dessins annexés sur lesquels :
- les figures 1 à 3 montrent, en coupe axiale, trois ensembles comprenant un dispositif selon l'invention selon trois variantes, et
- la figure 4 est une vue en coupe transversale selon la ligne IV-IV de la figure 1, montrant seulement le piston de freinage.

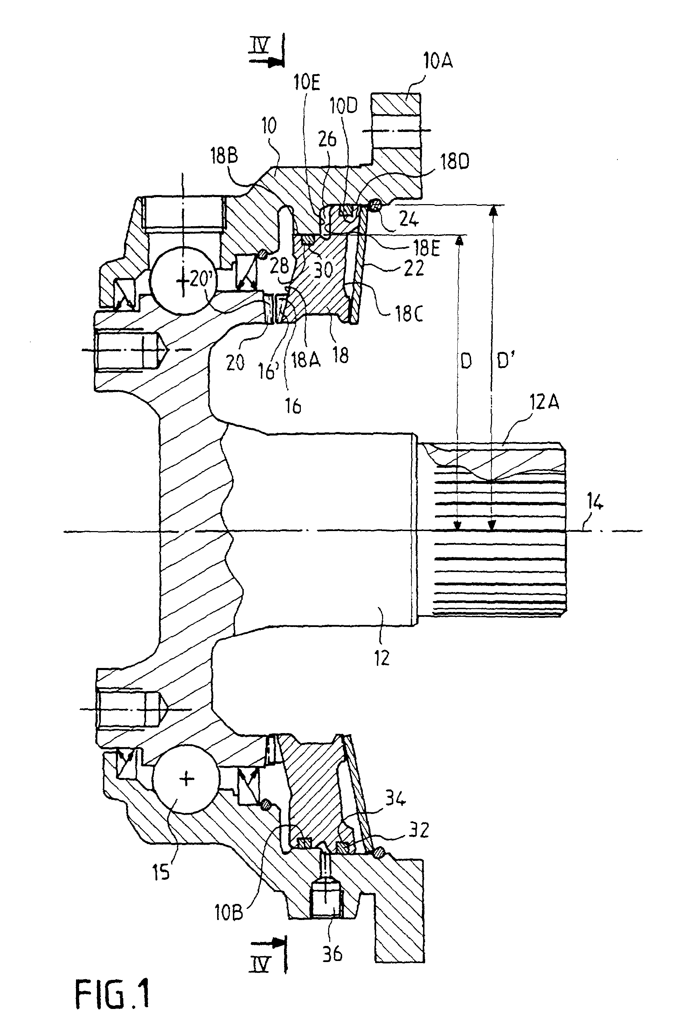

Sur la figure 1, les premiers et deuxièmes éléments susceptibles de tourner l'un par rapport à l'autre sont respectivement constitués par une partie de carter 10 et par un arbre 12.

Cet ensemble peut constituer une portion d'un moteur hydraulique, l'arbre étant solidaire en rotation d'un bloc-cylindres par des cannelures 12A, tandis que, par une bride radiale 10A, la partie de carter 10 peut être fixée à une autre partie de carter supportant la came du moteur. Il peut s'agir d'un moteur à carter fixe et à arbre tournant, ou d'un moteur à carter tournant et à arbre fixe. En tout état de cause, la partie de carter 10 et l'arbre 12 sont susceptible de tourner l'un par rapport à l'autre autour de l'axe de rotation 14.

L'arbre et la partie de carter sont supportés l'un par rapport à l'autre par des moyens de roulement comprenant des organes de roulement par exemple constitués par des billes 15 disposées dans des pistes à quatre points de contact. De manière générale, tous types de moyens de roulement aptes à supporter les efforts s'exerçant entre le premier élément 10 et le deuxième élément 12 lors de leur rotation relative peuvent être utilisés.

Le dispositif de frein comporte une première série de dents 16 d'un crabot portées par une face radiale 18A du piston de freinage 18, ainsi qu'une deuxième série de dents 20 du crabot.

Les génératrices des dents peuvent être radiales, comme indiqué en trait plein, ou coniques, comme indiqué en trait interrompu par les références 16' et 20'.

Le piston de freinage 18 est solidaire en rotation du premier élément constitué par la partie de carter 10. A cet effet, le piston présente une face axiale de couplage 18B ayant un profil de couplage et cette partie de carter 10 présente une face axiale de couplage 10B ayant également un profil de couplage et coopérant avec la face de couplage 18B du piston.

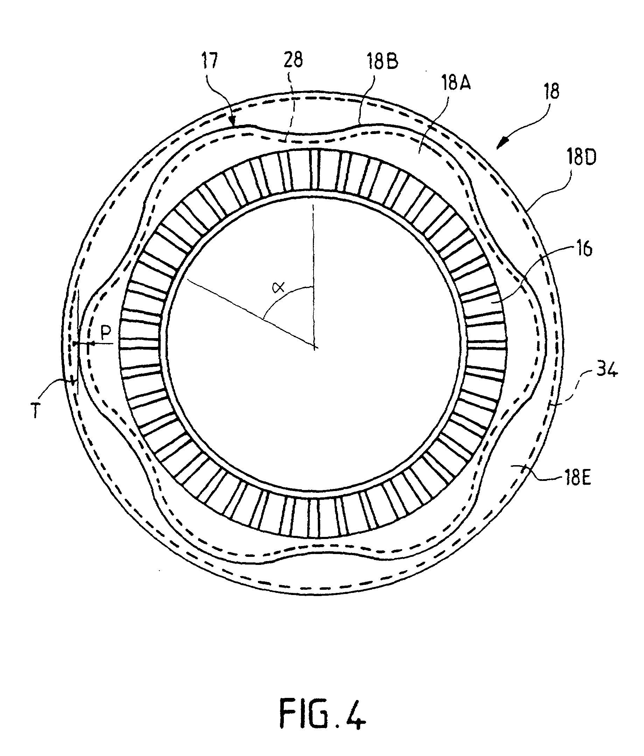

La figure 4 permet de mieux comprendre la conformation de ces profils de couplage. On voit la face radiale 18A du piston qui est équipée des dents 16 du crabot. On voit également la face 18B du piston qui présente une forme ondulée, les ondulations étant exemptes d'arêtes vives. Dans l'exemple représenté, les ondulations de la face 18B présentent six lobes.

Pour simplifier, on n'a pas représenté en coupe transversale les ondulations de la face de couplage 10B de la partie de carter 10. Elles ont en effet une forme complémentaire de celle des ondulations de la face 18B de manière à permettre, comme on le voit en comparant la moitié supérieure et la moitié inférieure de la figure 1, que les ondulations de la face 10B et celles de la face 18B s'imbriquent les unes dans les autres. On choisit de préférence que les ondulations des faces 10B et 18B soient exactement complémentaires, c'est-à-dire que, pour chaque partie saillante des ondulations de la face 18B corresponde une partie en creux de la face 10B dans laquelle s'engage à complémentarité de forme cette partie saillante, et réciproquement.

Dans l'exemple représenté, les ondulations de la face 18B sont strictement périodiques et sont au nombre de 6. Par conséquent, la période 17 des ondulations s'étend sur un secteur angulaire α égal à 60°.

Sur la figure 1, le premier élément 10, constitué par une partie du carter, s'étend autour du piston 18. Par conséquent, la face de couplage 10B est située sur une face axiale de la partie de carter 10 qui est tournée vers l'axe de rotation 14, tandis que la face de couplage 18B est située sur une face axiale du piston 18 qui est tournée à l'opposé de l'axe de rotation.

De plus, la partie de carter 10 est également disposée autour de l'arbre 12, et les faces de couplage 10B et 18B sont situées dans une région de l'ensemble représenté sur la figure 1 qui est éloignée de l'axe de rotation 14.

Le piston 18 est constamment rappelé vers sa position active de frein par l'action de rappel élastique d'une rondelle ressort 22 qui est calée en 24 par rapport à l'élément 10 et qui coopère avec la face arrière 18C du piston 18 (face opposée à celle qui porte les dents 16).

Le piston est susceptible d'être déplacé vers sa position inactive représentée sur la partie supérieure de la figure 1 par alimentation en fluide d'une chambre de défreinage 26 qui est située entre le piston 18 et la partie de carter 10. Plus précisément la face de couplage 18B présente une gorge d'étanchéité 28 dans laquelle est disposé un joint 30 qui réalise une liaison étanche entre les faces de couplage 18B et 10B. Bien entendu, on pourrait aussi choisir de réaliser la gorge sur la face de couplage 10B.

Le fond de cette gorge 28 est indiqué en trait interrompu sur la figure 4, et l'on voit que la profondeur de la gorge est constante sur toute sa longueur. Ainsi, la face de couplage 10B ayant une forme complémentaire de celle de la face de couplage 18B, le joint 30 réalise la liaison étanche en ayant une section constante. En chaque point de la gorge 28, la profondeur P de cette gorge est mesurée perpendiculairement à partir d'une tangente T au profil de couplage de la face 18B. Bien entendu, si la gorge était ménagée dans la face de couplage 10B, cette profondeur P serait mesurée à partir d'une tangente au profil de couplage de cette face 10B.

La gorge 28 est avantageusement apte à contenir un joint 30 de section sensiblement circulaire. En effet, la section de cette gorge peut être rectangulaire. Elle peut également être carrée, semi-circulaire ou autre, de sorte que la gorge peut être apte à contenir un joint à section circulaire, carrée ou rectangulaire, voire un joint dont la section présente plusieurs lobes, par exemple quatre.

Comme on l'a indiqué précédemment, on peut choisir de réaliser une gorge à profondeur variable, son fond étant circulaire, en déterminant le joint d'étanchéité en conséquence.

Quoiqu'il en soit, il est préférable que le joint d'étanchéité choisi dépasse du profil de couplage dans lequel est réalisée la gorge selon une hauteur constante afin de réaliser la liaison étanche avec le profil de couplage conjugué.

La chambre 26 est délimitée d'un premier côté par le joint 30 disposé entre les faces de couplage 10B et 18B. A son autre extrémité axiale, cette chambre 26 est délimitée par un autre joint, désigné par la référence 32 et disposé dans une gorge 34 réalisée dans une face axiale 18D du piston ou dans une face axiale 10D de la périphérie interne de la partie de carter 10, ces deux faces axiales étant dénommées faces axiales d'étanchéité et étant situées en regard l'une de l'autre. Par exemple, ces faces axiales sont simplement cylindriques à base circulaire. La face axiale d'étanchéité 10D de la partie de carter 10 est raccordée à la face de couplage 10B par un décrochement radial 10E, tandis que la face axiale d'étanchéité 18D du piston 18 est raccordée à la face de couplage 18B par un décrochement radial 18E formant une face radiale en regard de la face radiale du décrochement 10E. Ainsi, les faces axiales 10B et 10D d'une part et les faces axiales 18B et 18D d'autre part, forment des étagements.

On comprend que, lorsqu'on alimente en fluide la chambre 26 par son conduit d'alimentation 36, le fluide repousse le piston 18 à l'encontre de l'action de rappel exercée par la rondelle ressort 22 et, par conséquent, ce fluide écarte l'une de l'autre les séries de dents 16 et 20. Sur la figure 4, on voit que la face axiale d'étanchéité 18D présente un diamètre général légèrement supérieur au plus grand diamètre de la face de couplage 18B. Le décrochement 18E est formé par la hauteur radiale entre la surface de la face de couplage 18B et le diamètre de la face 18D. Sur la figure 4, on a également représenté en trait interrompu le fond de la gorge 34 qui peut être à profondeur constante.

Ainsi, dans l'exemple de la figure 1, la face de couplage du piston est disposée sur la périphérie externe de ce dernier, mais il existe une face, en l'espèce la face axiale d'étanchéité 18D, qui est davantage éloignée de l'axe 14 que cette face de couplage 18B.

Toutefois, il doit être entendu qu'il est possible de réaliser les faces d'étanchéité sur un plus petit diamètre que les faces de couplage. Par exemple, le dispositif représenté sur la figure 1 pourrait être modifié pour réaliser les faces 10B et 18B de telle sorte qu'elles soient cylindriques à base circulaire, leur diamètre étant par exemple égal au plus petit diamètre D de la face 18B représentée sur la figure 1, tandis que les faces de couplage seraient réalisées à la place des faces 10D et 18D, leur plus grand diamètre (les sommets des ondulations du piston) étant par exemple sensiblement égal au diamètre D' de la face 18D de la figure 1, tandis que leur plus petit diamètre serait légèrement supérieur au diamètre D.

On peut également choisir que non seulement les faces 10B et 18B, mais également les faces 10D et 18D présentent des ondulations de couplage décalées pour ménager dans la chambre de défreinage des éléments de paroi radiale permettant l'appui du fluide pour déplacer le piston.

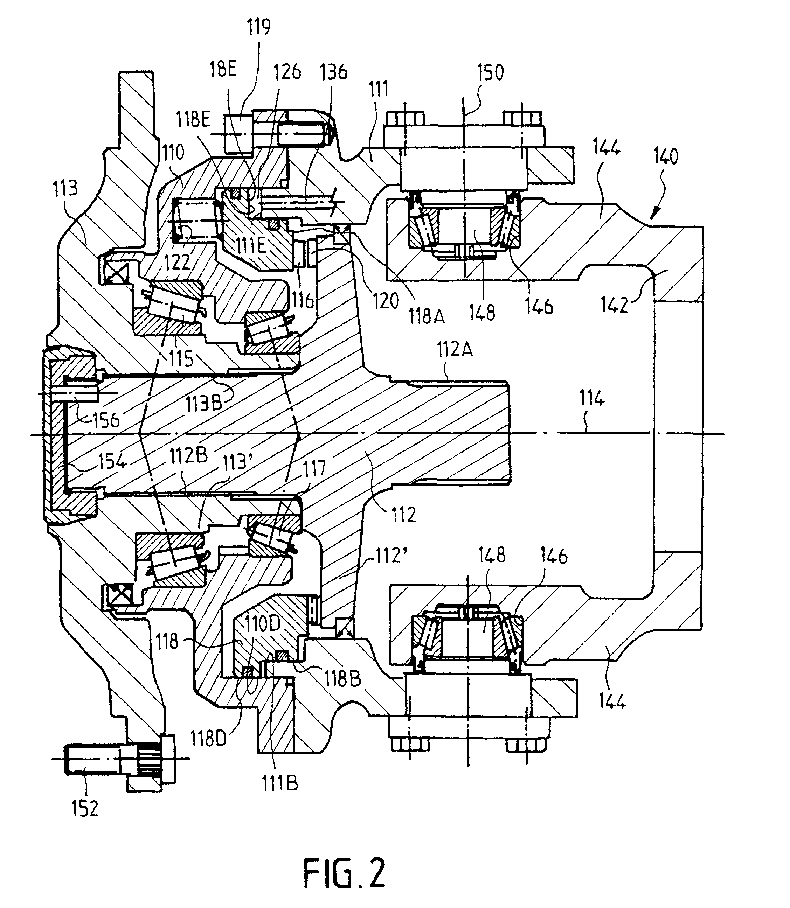

La figure 2 montre un autre ensemble sur lequel peut s'appliquer le dispositif conforme à l'invention. Il s'agit d'un support palier pour une roue directrice d'un véhicule. Ainsi, cet ensemble comprend un étrier 140 ayant une base annulaire 142, qui peut être fixée au châssis d'un véhicule et à partir de laquelle partent deux oreilles 144 dirigées axialement. Sur la périphérie externe de ces oreilles sont prévus des renfoncements 146 dans lesquels sont engagés des pivots 148 diamétralement opposés. Une pièce de révolution 111 est liée aux oreilles 144 par l'intermédiaire de ces pivots 146, de sorte que la pièce 111 peut tourner par rapport à la pièce 140 autour d'un axe de pivotement 150 perpendiculaire à l'axe de rotation 114.

La pièce de révolution 111 est fixée par des vis 119 à une autre pièce de révolution 110. Ces vis 119 rendent solidaires les pièces 110 et 111, de sorte que l'ensemble constitué par les pièces 110 et 111 forme un carter qui constitue le "premier élément" de l'ensemble, par rapport auquel peut tourner un arbre 112 autour de l'axe de rotation 114, cet arbre 112 étant disposé à l'intérieur de ce carter. On voit que l'extrémité libre de l'arbre 112 qui s'étend sous la pièce 111 est pourvue de cannelures 112A qui permettent sa liaison, par l'intermédiaire d'un cardan, avec un arbre moteur.

Une bride 113 qui dépasse au-delà de la pièce 110 est raccordée à la pièce 112 par des cannelures 113B et 112B, les cannelures 113B étant ménagées sur la périphérie interne d'un manchon 113' qui fait corps avec la pièce 113 et qui s'étend à l'intérieur de la partie de carter 110. Ainsi, la bride 113 est solidaire en rotation de l'arbre 112. L'ensemble constitué par l'arbre 112 et par la bride 113 constitue donc le "deuxième élément" qui est susceptible de tourner autour de l'axe 114 par rapport au premier élément constitué par les parties de carter 110 et 111. La bride 113 présente des perçages dans lesquels peuvent être engagées des vis ou goujons 152 qui permettent la fixation d'une roue.

On comprend que l'arbre 112 et la bride 113 peuvent être entraînés en rotation autour de l'axe 114 par un arbre moteur, tandis que, grâce aux pivots 148, l'ensemble 110, 111, 112, 113 peut tourner autour de l'axe 150. Ainsi, la roue fixée à la bride 113 est à la fois motrice et directrice. Un écrou 154 et une goupille 156 complètent le blocage de la bride 113 par rapport à l'arbre 112.

Le premier élément, constitué par les pièces 110 et 111, est fixe vis-à-vis de la rotation autour de l'axe 114, et c'est le deuxième élément constitué par l'arbre 112 et la bride 113 qui tourne autour de cet axe. Ce deuxième élément est supporté par rapport au premier (par rapport à la pièce 110) par des moyens de roulement 115 et 117 comprenant par exemple des roulements coniques.

Le dispositif de frein comprend une première série de dents de crabot 116 solidaires de la face radiale 118A du piston de freinage 118 et une deuxième série de dents 120 solidaires d'une face radiale d'une bride 112', faisant corps avec l'arbre 112 ou fixée sur ce dernier, par exemple par des cannelures, qui est disposé à l'intérieur de la pièce 111.

Le piston 118 est constamment rappelé vers sa position active de freinage par des ressorts hélicoïdaux 122 régulièrement répartis sur une circonférence. La face de couplage 118B du piston est ménagée sur une partie axiale de ce piston voisine de sa face radiale 118A. La face de couplage 111B du "premier élément" est ménagée sur un tronçon axial de la périphérie interne de la pièce 111 qui est située en regard de la face 118B. L'extrémité radiale de ce tronçon axial, forme, par rapport à la périphérie interne de la pièce 110, un décrochement 111E en regard duquel s'étend un décrochement 118E formé sur le piston. Les faces de couplage 111B et 118B présentent des ondulations analogues à celles des faces de couplage 10B et 18B de la figure 1. La pièce 110 et le piston 118 présentent également des faces axiales cylindriques d'étanchéité, 110D et 118D, disposées comme les faces 10D et 18D de la figure 1.

Les faces de couplage 111B et 118B d'une part, et les faces d'étanchéité 110D et 118D d'autre part, sont étanchées par des joints analogues aux joints 30 et 32 de la figure 1, ces joints étant disposés dans des gorges analogues aux gorges 28 et 34.

Comme pour la figure 1, les faces d'étanchéité sont situées sur un diamètre supérieur à celui sur lequel sont situées les parties de plus grand diamètre des faces de couplage 111B et 118B. La chambre de défreinage 126 est ménagée entre les décrochements 111E et 118E. Le conduit de défreinage 136 débouche dans cette chambre, il est ménagé dans la pièce 111 (il est seulement partiellement représenté sur la figure 2).

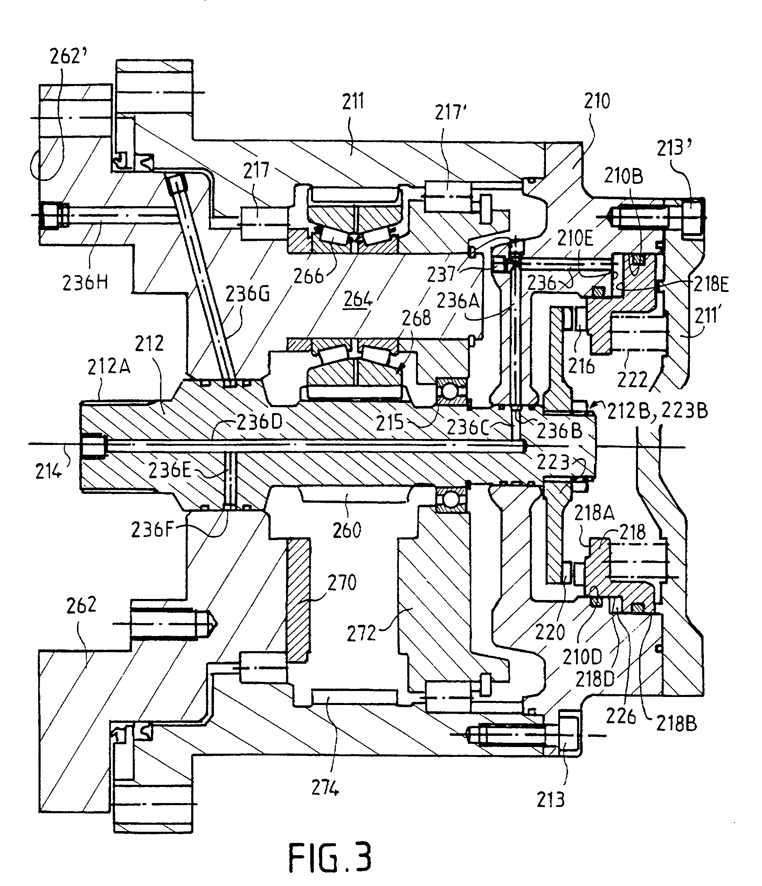

On décrit maintenant la figure 3 qui montre un autre ensemble sur lequel peut être adapté un dispositif conforme à l'invention. Cet ensemble est formé par un réducteur dont l'arbre 212, qui comporte à cet effet des cannelures 212A, peut être entraîné en rotation par un arbre moteur lui-même entraîné par exemple par un moteur hydraulique. Cet arbre 212 tourne autour de l'axe de rotation 214 sur lequel il est centré. L'arbre présente, dans une région médiane, une denture 260 formant le pignon solaire du réducteur. L'ensemble comporte encore un porte-satellites 262 ayant des extensions cylindriques 264 (par exemple au nombre de trois) qui, par l'intermédiaire de roulements 266, portent des satellites 268 formant des pignons dont les dents engrènent avec les dents du pignon solaire 260.

Le porte-satellite est fixe vis-à-vis de la rotation autour de l'axe 214. Pour maintenir les satellites en place, des anneaux de blocage 270 et 272 sont fixés par rapport au porte-satellite, les roulements qui supportent les satellites étant maintenus entre les faces radiales en regard de ces anneaux. L'arbre 212 est supporté à rotation par rapport à l'anneau 272 par des moyens de roulement 215.

L'ensemble comporte encore un carter comprenant deux parties 210 et 211 assemblées par des vis 213, ainsi qu'une troisième partie 211', fixée sur la partie 210 par des vis 213', ayant globalement la forme d'un flasque radial et fermant le carter du côté opposé à l'extrémité de l'arbre 212 qui porte les cannelures 212A.

La périphérie interne de la partie 211 du carter comporte une denture interne 274 sur laquelle engrènent les dents des satellites 268. Le diamètre sur lequel est placée la denture 274 étant évidemment largement supérieur au diamètre sur lequel est placée la denture 260, le carter formé par l'ensemble des pièces 210, 211 et 211' tourne moins vite que l'arbre 212.

Dans cet exemple, le "premier élément" est constitué par le carter 210, 211, 211' qui tourne autour de l'axe de rotation 214, tandis que le "deuxième élément" comprend l'arbre 212 qui tourne également autour de l'axe 214, mais à une vitesse supérieure. Ainsi, du fait de cette différence de vitesse, les premiers et deuxièmes éléments sont montés à rotation relative autour de l'axe 214.

La partie 211 du carter est supportée à rotation par rapport au porte-satellites par des moyens de roulement 217 et 217', les organes roulants des moyens de roulement 217' étant disposés entre l'anneau 272 et la périphérie interne de la partie de carter 211. Ainsi, le "premier élément" et le "deuxième élément" sont supportés l'un par rapport à l'autre par les moyens de roulement 215, 217 et 217'.

Le dispositif de frein de l'ensemble représenté sur la figure 3 comprend une première série de dents 216 solidaires d'une face radiale 218A du piston 218, ainsi qu'une deuxième série de dents 220 réalisées sur une face radiale d'une bride radiale 223 qui est fixée à l'arbre 212 en étant rendue solidaire en rotation par rapport à ce dernier par des cannelures 212B et 223B. Il faut noter que la bride 223 pourrait également être réalisée monobloc avec cet arbre. Le piston 218 est constamment rappelé vers sa position active de freinage par des ressorts hélicoïdaux 222 régulièrement répartis sur une circonférence.

Le piston coopère avec la partie 210 du carter. Plus précisément, la face de couplage 218B du piston est située sur une portion axiale de ce piston, sur sa face radialement la plus extérieure. En d'autres termes, cette face de couplage délimite l'enveloppe externe du piston. La face de couplage 210B du premier élément est quant à elle située sur une face axiale de la périphérie interne de la partie de carter 210 qui est située en regard de la face 218B du piston. La face de couplage 218B est raccordée par un décrochement 218E à une face axiale d'étanchéité 218D de ce piston, qui est situé radialement plus près de l'axe que la face 218B. De même, la face de couplage 210B est raccordée par un décrochement 210E à la face axiale d'étanchéité 210D de ce premier élément. Les faces axiales d'étanchéité 210D et 218D peuvent être cylindriques à base circulaire. La chambre de défreinage 226 est ménagée entre les décrochements formant des faces radiales 210E et 218E. Cette chambre de défreinage peut être alimentée en fluide pour solliciter le piston vers sa position inactive par un conduit de défreinage 236. Ce conduit comporte en fait plusieurs tronçons, à savoir un tronçon axial 236 qui est ménagé dans la pièce 210 et qui débouche directement dans la face de décrochement 210E.

Ce tronçon axial 236 est raccordé par un tronçon radial 236A à une gorge 236B qui est ménagée sur la périphérie externe de l'arbre 212, cette gorge étant elle-même raccordée à un tronçon radial de conduit 236C réalisé dans l'arbre 212. Bien entendu, le premier tronçon axial 236 et le tronçon radial 236A sont bouchés par des bouchons 237 du côté de leurs extrémités opposées à, respectivement, la chambre de défreinage 226 et la gorge 236B. Le conduit 236C est lui-même raccordé à un tronçon axial 236D réalisé dans l'arbre, auquel est raccordé un autre tronçon radial 236E qui débouche dans une nouvelle gorge 236F réalisée sur la périphérie externe de l'arbre 212, entre une surface axiale de cet arbre et une surface axiale en regard du porte-satellites 262. Cette gorge 236F est raccordée à un conduit 236G sensiblement radial (sur la figure, il est oblique), ce conduit est enfin raccordé à un tronçon axial 236H dont l'ouverture, qui permet le raccordement à une source de défreinage, est située sur la face radiale 262' du porte-satellites qui est opposée au couvercle de carter 211'. Le tronçon axial 236D est fermé par un bouchon sur l'extrémité libre de l'arbre 212 pourvu des cannelures 212A, de même que le tronçon 236G est fermé par un bouchon à son extrémité opposée à la gorge 236F.

Il faut enfin noter qu'avec l'ensemble de la figure 3, on pourrait prévoir un dispositif de frein qui serve à freiner et à immobiliser en rotation le carter, par sa partie 210, avec le porte-satellites 262. Par exemple, le piston de frein serait solidaire en rotation de la partie 210 comme le piston 218 de la figure 3, tandis que la deuxième série de dents serait fixée sur un élément solidaire en rotation du porte-satellites, par exemple l'anneau 272.

## Revendications

1. Dispositif de frein de la rotation d'un premier élément (10 ; 110, 111; 210, 211, 211') par rapport à un deuxième élément (12 ; 112, 113 ; 212, 223), susceptibles de tourner l'un par rapport à l'autre autour d'un axe de rotation (14 ; 114 ; 214) et supportés l'un par rapport à l'autre par l'intermédiaire de moyens de roulement (15 ; 115, 117 ; 215, 217, 217'), le dispositif comprenant des premiers et des deuxièmes moyens de freinage (16, 20 ; 116, 120 ; 216, 220) respectivement solidaires du premier et du deuxième élément vis-à-vis de la rotation autour de l'axe de rotation, ainsi qu'un piston de freinage (18 ; 118 ; 218) apte à occuper une position active de frein dans laquelle il sollicite les premiers et les deuxièmes moyens de freinage en engagement mutuel pour empêcher leur rotation relative et une position inactive dans laquelle lesdits éléments sont libres de tourner l'un par rapport à l'autre, ledit piston étant sollicité en permanence vers sa position active par des moyens de rappel élastique (22 ; 122 ; 222), tandis que le piston est susceptible d'être déplacé vers sa position inactive par alimentation en fluide d'une chambre de défreinage,
**caractérisé en ce que** les premiers et deuxièmes moyens de freinage sont respectivement constitués par une première (16 ; 116 ; 216) et une deuxième (20 ; 120 ; 220) série de dents appartenant à un crabot, **en ce que** les dents de la première série sont solidaires d'une face radiale (18A ; 118A ; 218A) du piston (18 ; 118 ; 218), et **en ce que** le premier élément (10 ; 111 ; 210) et le piston (18 ; 118 ; 218) présentent chacun un profil de couplage s'étendant sur une face axiale de couplage (10B, 18B ; 111B, 118B ; 210B, 218B), lesdits profils de couplage formant, vus en coupe transversale à l'axe de rotation, des ondulations (17) exemptes d'arêtes vives, les ondulations du profil de couplage du premier élément (10 ; 110, 111 ; 210, 211, 211') et les ondulations du profil de couplage du piston (18 ; 116 ; 218) étant aptes à s'imbriquer les unes dans les autres pour rendre le piston solidaire en rotation du premier élément.

2. Dispositif selon la revendication 1, **caractérisé en ce que** l'une (18B ; 118B ; 218B) des faces de couplage présente au moins une gorge d'étanchéité (28) apte à recevoir un joint d'étanchéité (30) destiné à réaliser une liaison étanche entre les deux faces axiales de couplage (10B, 18B ; 111B, 118B; 210B, 218B).

3. Dispositif selon la revendication 2, **caractérisé en ce que** la gorge d'étanchéité (28) a une profondeur (P), mesurée pour chaque point de ladite gorge perpendiculairement à une droite tangente (T) au profil de couplage de la face dans laquelle cette gorge est ménagée, qui est sensiblement constante sur le pourtour de la gorge de sorte que, les deux profils de couplage (10B, 18B ; 111B, 118B ; 210B, 218B) ayant des formes complémentaires, la gorge d'étanchéité (28) est apte à loger un joint d'étanchéité (30) de section constante.

4. Dispositif selon la revendication 3, **caractérisé en ce que** la gorge d'étanchéité (28) est apte à contenir un joint (30) de section sensiblement circulaire.

5. Dispositif selon l'une quelconque des revendications 2 à 4, **caractérisé en ce que** le premier élément (10 ; 110, 111 ; 210, 211, 211') et le piston (18 ; 118 ; 218) présentent, chacun, une face axiale d'étanchéité (10D, 18D ; 110D, 118D; 210D, 218D) raccordée par un décrochement (10E, 18E ; 111E, 118E ; 210E, 218E) à la face de couplage (10B ; 111B ; 210B) du premier élément, respectivement à la face de couplage (18B ; 118B ; 218B) du piston, lesdites faces axiales d'étanchéité du premier élément et du piston étant situées en regard l'une de l'autre et coopérant entre elles par l'intermédiaire d'une liaison étanche (32, 34) et **en ce que** la chambre de défreinage (26 ; 126 ; 226) est ménagée entre la liaison étanche des faces de couplage et la liaison étanche des faces d'étanchéité.

6. Dispositif selon la revendication 5, **caractérisé en ce que** les faces axiales d'étanchéité (10D, 18D ; 110D, 118D ; 210D, 218D) sont cylindriques à base circulaire.

7. Dispositif selon l'une quelconque des revendications 1 à 6, **caractérisé en ce que** le premier élément (10 ; 110, 111 ; 210, 211) s'étend au moins en partie autour du piston (18 ; 118 ; 218) et **en ce que** la face de couplage (10B ; 111B ; 210B) du premier élément et la face de couplage (18B ; 118B ; 218B) du piston sont respectivement situées sur une face axiale du premier élément qui est tournée vers l'axe de rotation (14 ; 114 ; 214) et sur une face axiale du piston qui tournée à l'opposé de l'axe de rotation.

8. Dispositif selon la revendication 7, **caractérisé en ce que** le premier élément (10 ; 110, 111, 210, 211) est disposé autour du deuxième élément (12 ; 112 ; 212, 223) et **en ce que** les faces de couplage dudit premier élément et du piston sont situées dans des régions éloignées de l'axe de rotation (14; 114 ; 214).

9. Dispositif selon la revendications 7 ou 8, **caractérisé en ce que** la face de couplage (218B) du piston (218) délimite l'enveloppe externe du piston.

10. Dispositif selon la revendication 7 ou 8, **caractérisé en ce qu'**il existe une face axiale (18D ; 118D) du piston (18 ; 118) qui est davantage éloignée de l'axe (14 ; 114) que la face de couplage (18B ; 118B) de ce piston.

## Patentansprüche

1. Bremsvorrichtung mit Drehung eines ersten Elements (10; 110, 111; 210, 211, 211') in bezug auf ein zweites Element (12; 112, 113; 212, 223), die sich im Verhältnis zueinander um eine Drehachse (14; 114, 214) zu drehen vermögen und die im Verhältnis zueinander durch Lagermittel (15; 115, 117; 215, 217, 217') gehalten werden, wobei die Vorrichtung erste und zweite Bremsmittel (16, 20; 116, 120; 216, 220) umfaßt, die gegenüber der Drehung um die Drehachse eine feste Einheit mit dem ersten bzw. dem zweiten Element bilden, sowie einen Bremskolben (18; 118; 218), der eine aktive Bremsstellung einzunehmen vermag, in der er die ersten und zweiten Bremsmittel in gegenseitigem Eingriff beansprucht, um ihre relative Drehung zu verhindern, sowie eine inaktive Stellung, in der sich diese Elemente im Verhältnis zueinander frei drehen können, wobei der Kolben durch die elastischen Rückstellmittel (22; 122; 222) ständig in Richtung auf seine aktive Stellung beansprucht wird, während der Kolben in Richtung auf seine inaktive Stellung durch Zufuhr von Flüssigkeit in eine Bremslösungskammer verschoben werden kann,
**dadurch gekennzeichnet, daß** die ersten und zweiten Bremsmittel von einer ersten (16; 116; 216) bzw. einer zweiten (20; 120; 220) Reihe von Zähnen einer Klaue gebildet werden, daß die Zähne der ersten Reihe mit einer radialen Fläche (18A, 118A; 218A) des Kolbens (18, 118; 218) eine feste Einheit bilden und daß das erste Element (10; 111; 210) und der Kolben (18; 118; 218) jeweils ein Kopplungsprofil aufweisen, das sich auf einer axialen Kopplungsfläche (10B, 18B; 111B, 118B; 210B, 218B) erstreckt, wobei diese Kopplungsprofile, im Querschnitt zur Drehachse gesehen, Wellen (17) ohne scharfe Kanten bilden und wobei die Wellen des Kopplungsprofils des ersten Elements (10; 110, 111; 210, 211, 211') und die Wellen des Kopplungsprofils des Kolbens (18; 116, 218) sich miteinander verzahnen können, damit sich der Kolben zusammen mit dem ersten Element dreht.

2. Vorrichtung nach Anspruch 1,
**dadurch gekennzeichnet, daß** eine (18B; 118B; 218B) der Kopplungsflächen wenigstens eine Dichtungsnut (28) aufweist, die eine Dichtung (30) aufzunehmen vermag, die eine dichte Verbindung zwischen den beiden axialen Kopplungsflächen (10B, 18B; 111B, 118B, 210B, 218B) herstellen soll.

3. Vorrichtung nach Anspruch 2,
**dadurch gekennzeichnet, daß** die Dichtungsnut (28) eine Tiefe (P) aufweist, die, für jeden Punkt der Nut quer zu einer Geraden (T) gemessen, die das Kopplungsprofil der Fläche tangiert, in der diese Nut ausgebildet ist, im wesentlichen über den gesamten Umfang der Nut konstant ist, so daß die Dichtungsnut (28) eine Dichtung (30) mit konstantem Querschnitt aufzunehmen vermag, da die beiden Kopplungsprofile (10B, 18B; 111B, 118B; 210B, 218B) komplementäre Formen haben.

4. Vorrichtung nach Anspruch 3,
**dadurch gekennzeichnet, daß** die Dichtungsnut (28) eine Dichtung (30) mit im wesentlichen kreisförmigem Querschnitt enthalten kann.

5. Vorrichtung nach einem der Ansprüche 2 bis 4,
**dadurch gekennzeichnet, daß** das erste Element (10, 110, 111; 210, 211, 211') und der Kolben (18; 118; 218) jeweils eine axiale Dichtungsfläche (10D, 18D; 110D, 118D; 210D, 218D) aufweisen, die durch einen Absatz (10E, 18E; 111E, 118E; 210E, 218E) mit der Kopplungsfläche (10B; 111B; 210B) des ersten Elements bzw. mit der Kopplungsfläche (18B; 118B; 218B) des Kolbens verbunden ist, wobei die axialen Dichtungsflächen des ersten Elements und des Kolbens einander gegenüberliegen und durch eine dichte Verbindung (32, 34) miteinander zusammenwirken, und daß die Bremslösungskammer (26; 126; 226) zwischen der dichten Verbindung der Kopplungsflächen und der dichten Verbindung der Dichtungsflächen angeordnet ist.

6. Vorrichtung nach Anspruch 5,
**dadurch gekennzeichnet, daß** die axialen Dichtungsflächen (10D, 18D; 110D, 118D; 210D, 218D) zylinderförmig sind mit runder Basis.

7. Vorrichtung nach einem der Ansprüche 1 bis 6,
**dadurch gekennzeichnet, daß** das erste Element (10, 110, 111; 210, 211) wenigstens zum Teil um den Kolben (18; 118, 218) verläuft und daß die Kopplungsfläche (10B; 111B; 210B) des ersten Elements und die Kopplungsfläche (18B, 118B; 218B) des Kolbens auf einer zur Drehachse (14; 114; 24) weisenden axialen Fläche des ersten Elements bzw. auf einer axialen Fläche des Kolbens liegt, die der Drehachse entgegengesetzt ist.

8. Vorrichtung nach Anspruch 7,
**dadurch gekennzeichnet, daß** das erste Element (10; 110, 111, 210, 211) um das zweite Element (12, 112; 212, 223) angeordnet ist und daß die Kopplungsflächen des ersten Elements und des Kolbens in von der Drehachse (14; 114; 214) entfernten Bereichen liegen.

9. Vorrichtung nach Anspruch 7 oder 8,
**dadurch gekennzeichnet, daß** die Kopplungsfläche (218B) des Kolbens (218) die äußere Ummantelung des Kolbens begrenzt.

10. Vorrichtung nach Anspruch 7 oder 8,
**dadurch gekennzeichnet, daß** es eine axiale Fläche (18D; 118D) des Kolbens (18; 118) gibt, die weiter von der Achse (14; 114) entfernt ist als die Kopplungsfläche (18B; 118B) von diesem Kolben.

## Claims

1. Brake apparatus for braking the rotation of a first element (10; 110, 111; 210, 211, 211') relative to a second element (12; 112, 113; 212, 223), which elements are mounted to rotate relative to each other about an axis of rotation (14; 114; 214), and are supported relative to each other via bearing means (15; 115, 117; 215, 217, 217'), the apparatus comprising first and second brake means (16, 20; 116, 120; 216, 220) constrained to rotate respectively with the first element and with the second element about the axis of rotation, and a brake piston (18; 118; 218) suitable for taking up an active braking position in which it urges the first and second brake means into mutual engagement so as to prevent the elements from rotating relative to each other, and an inactive position in which said elements are free to rotate relative to each other, said piston being continuously urged towards its active position by resilient return means (22; 122; 222) and being suitable for being displaced towards its inactive position by feeding a brake release chamber with fluid;
said apparatus being **characterised in that** the first and second brake means are constituted respectively by a first series (16; 116; 216) and by a second series (20; 120; 220) of teeth belonging to a positive clutch, **in that** the teeth of the first series are secured to or integral with a radial face (18A; 118A; 218A) of the piston (18; 118; 218), and **in that** the first element (10; 111; 210) and the piston (18; 118; 218) have respective coupling profiles extending over axial coupling faces (10B, 18B; 111B, 118B; 210B, 218B), said coupling profiles, as seen in cross section transverse to the axis of rotation, forming undulations (17) free from sharp edges, the undulations of the coupling profile of the first element (10; 110, 111; 210, 211, 211') and the undulations of the coupling profile of the piston (18; 116; 218) being suitable for interfitting so as to constrain the piston to rotate with the first element.

2. Apparatus according to claim 1, **characterised in that** one of the coupling faces (18B, 118B; 218B) is provided with at least one sealing groove (28) suitable for receiving a sealing gasket (30) for providing a sealed join between the two axial coupling faces (10B, 18B; 111B, 118B; 210B, 218B).

3. Apparatus according to claim 2, **characterised in that** the depth (P) of the sealing groove (28), as measured for every point of said groove perpendicularly to a tangent (T) to the coupling profile of the face in which the groove is provided, is substantially constant around the groove so that, with the two coupling profiles (10B, 18B; 111B, 118B; 210B, 218B) having complementary shapes, the sealing groove (28) is suitable for receiving a sealing gasket (30) of constant section.

4. Apparatus according to claim 3, **characterised in that** the sealing groove (28) is suitable for containing a gasket (30) of substantially circular section.

5. Apparatus according to any one of claims 2 to 4, **characterised in that** the first element (10; 110, 111; 210, 211, 211') and the piston (18; 118; 218) have respective axial sealing faces (10D, 18D; 110D, 118D; 210D, 218D) connected via respective setbacks (10E, 18E; 111E, 118E; 210E, 218E) respectively to the coupling face (10B; 111B; 210B) of the first element and to the coupling face (18B, 118B, 218B) of the piston, said axial sealing faces of the first element and of the piston being situated facing each other and co-operating with each other via a sealed join (32, 34), and **in that** the brake release chamber (26; 126; 226) is provided between the sealed join of the coupling faces and the sealed join of the sealing faces.

6. Apparatus according to claim 5, **characterised in that** the axial sealing faces (10D, 18D; 110D, 118D; 210D, 218D) are circularly cylindrical.

7. Apparatus according to any one of claims 1 to 6, **characterised in that** the first element (10; 110, 111; 210, 211) extends at least in part around the piston (18; 118; 218), and **in that** the coupling face (10B; 111B; 210B) of the first element and the coupling face (18B; 118B; 218B) of the piston are respectively situated on an axial face of the first element that faces towards the axis of rotation (14; 114; 214) and on an axial face of the piston that faces away from the axis of rotation.

8. Apparatus according to claim 7, **characterised in that** the first element (10; 110, 111, 210, 211) is disposed around the second element (12; 112; 212, 223), and **in that** the coupling faces of said first element and of the piston are situated in regions distant from the axis of rotation (14; 114; 214).

9. Apparatus according to claim 7 or 8, **characterised in that** the coupling face (218B) of the piston (218) defines the outer limit of the piston.

10. An apparatus according to claim 7 or 8, **characterised in that** one of the axial faces (18D; 118D) of the piston (18, 118) is further away from the axis (14; 114) than the coupling face (18B; 118B) of said piston.
